# EUROPÄISCHE PATENTSCHRIFT

(11) **EP 0 475 084 B1**
(45) Veröffentlichungstag und Bekanntmachung des Hinweises auf die Patenterteilung: **01.06.1994**
(21) Anmeldenummer: 91113368.4
(22) Anmeldetag: 08.08.1991
(51) Int. Cl.: F16F 1/38, F16F 1/36

(54) **Radial-Buchsenlager**
Radial bushlike support
Support radial en forme de manchon

(30) Priorität: 09.08.1990 DE 4025284
(43) Veröffentlichungstag der Anmeldung: 18.03.1992
(73) Patentinhaber: METZELER GIMETALL AG, D-80992 München (DE)
(72) Erfinder: Bitschkus, Horst, W-5411 Hilgert (DE)
(74) Vertreter: Seibert, Hannelore

(56) Entgegenhaltungen:
- DE-C- 2 755 117
- DE-C- 4 002 357
- FR-A- 2 200 454
- FR-A- 2 473 662
- FR-A-24 464 21
- GB-A- 639 963
- GB-A- 1 545 843
- US-A- 3 402 924

## Beschreibung

Die Erfindung bezieht sich auf ein Radial-Buchsenlager, insbesondere für Kraftfahrzeuge, mit einer zylindrischen Außenhülse und einem zentralen Buchsenkern, zwischen denen mindestens ein Elastomerkörper vorgesehen ist, wobei der Ringspalt zwischen Außenhülse und Buchsenkern vollständig umlaufend mit dem Elastomerkörper ausgefüllt ist, der den Ringspalt zumindest auf einem Teilbereich durchsetzende Hohlkanäle mit einem Kanalabschnitt mit zunehmender Verengung und einer sich daran anschließenden Erweiterung auf den Ursprungsquerschnitt aufweist. Derartige Radialbuchsen sind beispielsweise aus der FR-A-2 473 662 bekannt, bei denen der Elastomerkörper einandergegenüberliegend mit zwei in etwa nierenförmigen Querschnitt aufweisenden Hohlkanälen versehen ist, um in einer radialen Richtung den Elastomerkörper mit einer geringeren Steifigkeit zu versehen.

Mit einer solchen Gestaltung ist jedoch eine Steifigkeitsabsenkung nur in einer Richtung möglich. Darüberhinaus weisen derartige Lager mit noch großen zusammenhängenden Gummiflächen ein schlechtes akustisches Übertragungsverhalten auf, da wegen der relativ großvolumigen Hohlkanäle nur kleine Abstrahlflächen zur Verfügung stehen. Außerdem sind Änderungen bezüglich der gewünschten Steifigkeit in verschiedenen radialen Richtungen nur durch prinzipielle Konstruktionsänderungen möglich.
Der vorliegenden Erfindung liegt demgegenüber die Aufgabe zugrunde, ein Radial-Buchsenlager zu schaffen, das ein erheblich verbessertes akustisches Übertragungsverhalten aufweist und bei dem mit sehr einfachen Mitteln eine Variation der Steifigkeiten in verschiedenen Radialrichtungen als auch in Axialrichtung erreicht werden kann.

Zur Lösung dieser Aufgabe ist erfindungsgemäß vorgesehen, daß der Elastomerkörper zwischen Außenhülse und Buchsenkern eingespannt ist, daß die Hohlkanäle einen kreisförmigen Querschnitt aufweisen und daß die Kanalabschnitte mit den Verengungen und Erweiterungen jeweils in Form einer Venturidüse so ausgebildet sind, daß der Übergang der jeweiligen Verengung zu der sich daran anschließenden Erweiterung stetig und ohne einen Kanalabschnitt mit konstantem Querschnitt erfolgt.

Durch die vollflächige Anbindung des Elastomerkörpers sowohl an die Außenhülse als auch an den Buchsenkern ergibt sich eine große Abstrahlfläche für akustische Schwingungen vom Bolzenkern nach außen, wodurch eine erhebliche Dämmung im großvolumigen Gummikörper erreicht wird. Wesentlich tragen dazu auch die im Elastomerkörper verlaufenden Hohlkanäle bei, die im Prinzip aus der DE-PS 723 596 bekannt sind. Durch Anordnung und Anzahl dieser Kanäle kann dabei die Steifigkeit in entsprechenden radialen Richtungen unterschiedlich eingestellt werden.

Dabei können diese Hohlkanäle parallel zur Buchsenachse verlaufen und den Elastomerkörper auf seiner gesamten Länge durchsetzen. Es ist aber auch möglich, daß die Hohlkanäle radial in mehreren Radialebenen im Elastomerkörper verlaufen und im Abstand vom Buchsenkern stumpf im Elastomerkörper enden.

Dabei kann der Elastomerkörper sowohl achsparallel verlaufende Hohlkanäle als auch zwischen den achsparallelen Hohlkanälen endende Radialkanäle aufweisen.

Bezüglich der Verteilung dieser Hohlkanäle ist es möglich, daß die achsparallelen Hohlkanäle mit gleichem gegenseitigen Abstand auf einer Zylinderfläche im Elastomerkörper angeordnet sind oder aber unterschiedlichen radialen Abstand von der Buchsenachse und/oder voneinander aufweisen.

Dabei ist es zweckmäßig, wenn die achsparallen Kanäle in Bereichen geringerer Radialsteifigkeit einen geringeren Abstand und/oder einen größeren Durchmesser aufweisen, als in Bereichen höherer Radialsteifigkeit.

Bezüglich einer Beschränkung der möglichen Auslenkung des Buchsenkerns kann der Elastomerkörper in axialer Richtung zweiteilig ausgebildet und zwischen den beiden Elastomerkörpern auf dem Buchsenkern ein radialer Bund als Radialanschlag angeordnet sein.

Es ist aber auch möglich, daß der Elastomerkörper einteilig ausgebildet ist und beiderseits des Elastomerkörpers je ein Bund als Radialanschlag vorgesehen ist. Diese Radialanschläge weisen zweckmäßigerweise eine geringere radiale Höhe als die Elastomerkörper auf und sind auf ihrem Außenumfang mit einer elastischen Auflage verbunden. Sie können gleichzeitig aber auch als Axialanschlag ausgebildet sein.

Bezüglich der Verbindung des Elastomerkörpers mit Außenhülse und Buchsenkern kann dieser - insbesondere bei achsparallelen Kanälen - direkt an beiden Flächen gehaftet, d.h. anvulkanisiert sein, oder aber nur an die Innenbuchse anvulkanisiert, während die Außenhülse axial aufgepreßt ist. Schließlich ist es auch möglich, den Elastomerkörper nur am Außenumfang an die Hülse anzuvulkanisieren und den Buchsenkern in den Elastomerkörper einzupressen, oder aber den Elastomerkörper gesondert auszuvulkanisieren und anschließend in den Ringspalt zwischen Außenhülse und zentralem Bolzen einzuschießen.

Anhand einer schematischen Zeichnung sind Aufbau und Funktionsweise von Ausführungsbeispielen nach der Erfindung näher erläutert. Dabei zeigen
- Fig. 1: einen Längsschnitt durch ein Radial-Buchsenlager in einstückiger Normalausführung,
- Fig. 2: einen Querschnitt durch dieses Lager entsprechend der Schnittlinie II-II mit unterschiedlicher Anordnung der Hohlkanäle,
- Fig. 3: ein Diagramm über die Steifigkeiten in den verschiedenen Radialrichtungen der Buchse nach Fig. 2,
- Fig. 4: einen Längsschnitt durch ein gleichartiges Lager mit mittigem Radialanschlag,
- Fig. 5: einen Querschnitt durch ein Radial-Buchsenlager mit zwei Varianten der geometrischen Anordnung der Axialkanäle,
- Fig. 6: einen Querschnitt durch ein solches Radial-Buchsenlager mit radialen Kanälen,
- Fig. 7: einen Längsschnitt durch ein Radial-Buchsenlager mit verschiedenartig gestalteten Axial- und Radialkanälen und
- Fig. 8: einen Längsschnitt durch ein Radial-Buchsenlager mit einstückigem Elastomerkörper und außenliegenden, stirnseitigen Radialanschlägen.

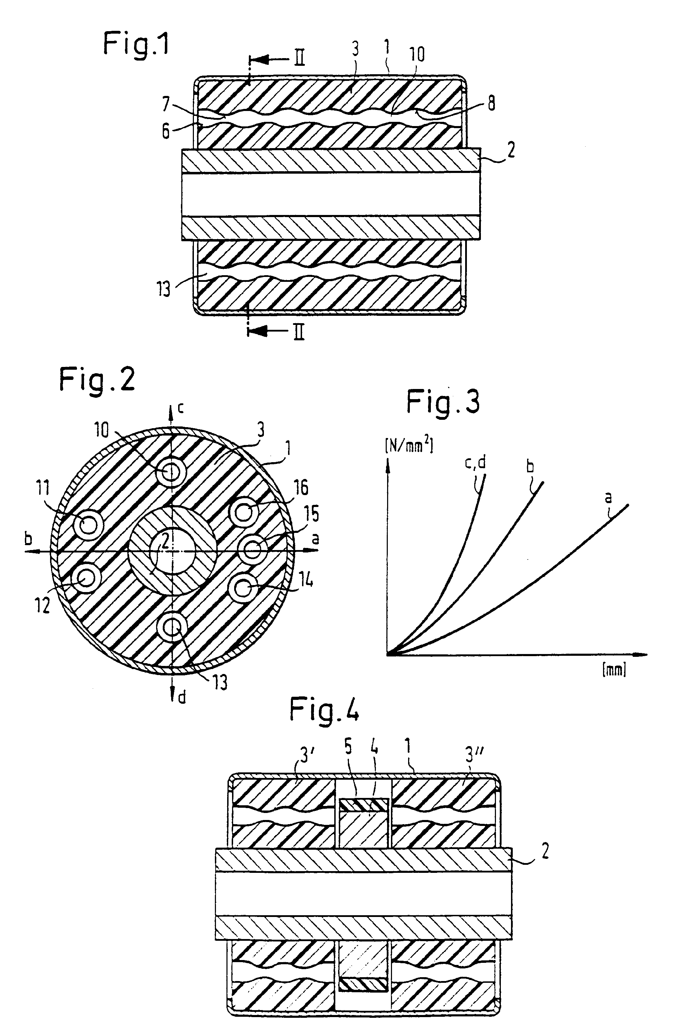

Wie man aus dem Längs- und Querschnitt nach Fig. 1 und 2 ersieht, weist das Radial-Buchsenlager eine zylindrische Außenhülse 1 und einen zentralen, ebenfalls zylindrischen Buchsenkern 2 auf, deren Zwischenraum vollständig mit einem Elastomerkörper 3 ausgefüllt ist.

Innerhalb des Elastomerkörpers 3 ist nunmehr eine Reihe von parallel zur Buchsenachse verlaufenden Hohlkanälen 10 bis 16 vorgesehen, die den Elastomerkörper 3 auf der ganzen Länge durchsetzen. Diese Hohlkanäle, von denen die Kanäle 10 und 13 im Längsschnitt nach Fig. 1 zu sehen sind, weisen ausgehend von einem größten Eingangsquerschnitt 6 venturiartige Verengungen 7 auf, an die sich dann wieder entsprechende Erweiterungen 8 in einem stetigen Kurvenverlauf anschließen. Die Form dieser Hohlkanäle bewirkt dabei eine bessere akustische Isolierung und ermöglicht darüber hinaus eine leichtere Entformung der entsprechenden Formkerne.

Wie man aus dem Querschnitt nach Fig. 2 ersieht, sind die Hohlkanäle 10 bis 16 in unterschiedlicher Verteilung innerhalb des Elastomerkörpers 3 vorgesehen, um damit unterschiedliche Steifigkeiten in verschiedenen radialen Richtungen zu erhalten, da die Steifigkeit abnimmt, je mehr derartige Hohlkanäle in dem bestimmten Bereich angeordnet sind.

Zur Verdeutlichung des Einflusses der Anzahl der Hohlkanäle sind in dem Diagramm nach Fig. 3 für verschiedene Kraftrichtungen jeweils über den entsprechenden Auslenkungen die erforderlichen Kräfte aufgetragen. Aus Fig. 2 ersieht man dazu, daß beispielsweise in Kraftrichtung a im Elastomerkörper 3 insgesamt 3 Hohlkanäle 14, 15 und 16 angeordnet sind, so daß das Buchsenlager in dieser Richtung die geringste Steifgkeit aufweist, was auch anhand der Kurve a im Diagramm nach Fig. 3 ersichtlich ist. In der entgegengesetzten Richtung b sind nur zwei Hohlkanäle 11 und 12 vorgesehen, so daß sich hier entsprechend dem Diagramm nach Fig. 3 eine höhere Steifigkeit b ergibt. In den senkrechten Richtungen c und d ist die Steifigkeit am höchsten, da hier nur jeweils ein Hohlkanal 10 bzw. 13 vorgesehen ist.

Durch entsprechende Wahl der geometrischen Anordnung und der Anzahl der Hohlkanäle bzw. der Wahl ihrer Durchmesser kann damit in einem solchen Radial-Buchsenlager die Steifigkeit in verschiedenen Radialrichtungen unterschiedlich eingestellt werden.

In Fig. 4 ist ein gleichartiges Radial-Buchsenlager im Längsschnitt dargestellt, das zusätzlich noch einen mittigen Radialanschlag 4 aufweist. Dieser Radialanschlag besteht aus einem auf den Buchsenkern 2 aufgesetzten Ring 4 oder aber ist als direkt angeformter Bund ausgebildet und weist jeweils einen Außendurchmesser auf, der kleiner ist als der Innendurchmesser der Außenhülse 1. Zusätzlich kann der Anschlag 4 am Außenumfang noch eine elastische Auflage 5 aufweisen, um ein hartes Anschlagen zu vermeiden.

Durch die mittige Anordnung des Radialanschlages 4 ist der Elastomerkörper 3 in zwei gleichen Teilen 3' und 3'' ausgebildet, die beidseitig symmetrisch zum Radialanschlag angeordnet sind.

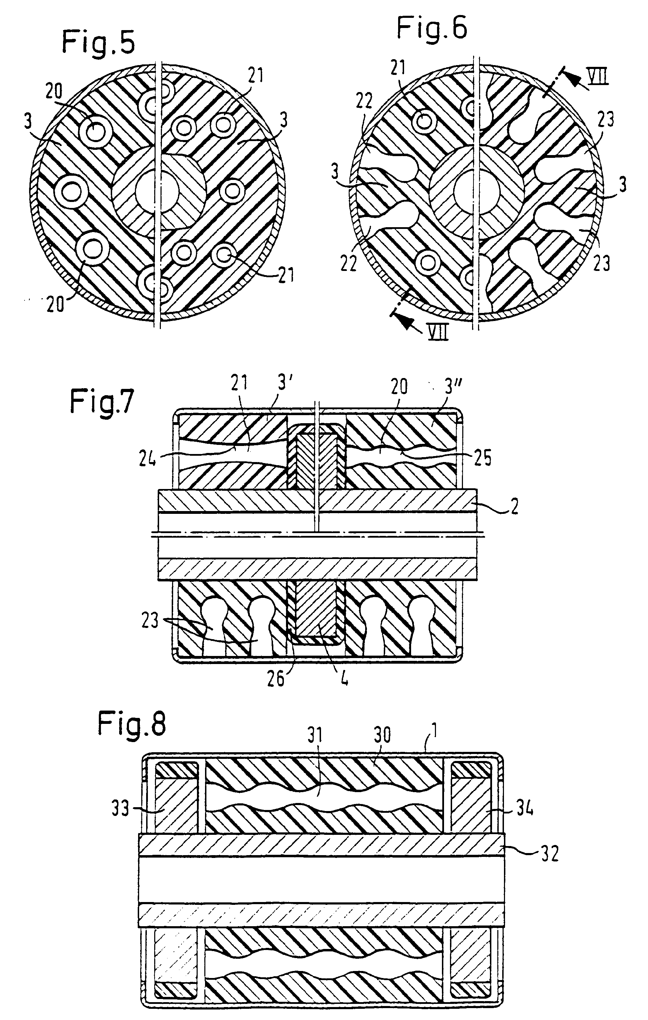

In Fig. 5 sind zwei weitere Gestaltungsmöglichkeiten der geometrischen Anordnung dieser Kanäle gezeigt. In der linken Hälfte des Querschnittes sind die Kanäle 20 in gleichmäßigen Abständen auf einem Zylindermantel innerhalb des Elastomerkörpers 3 angeordnet. Damit ergibt sich ein Buchsenlager, das in allen Radialrichtungen die gleiche Steifigkeit aufweist.

Auf der rechten Hälfte der Fig. 5 sind Hohlkanäle 21 eingezeichnet, die einen geringeren Durchmesser als die Kanäle 20 auf der linken Seite aufweisen und bei dem darüber hinaus das Buchsenlager sich in seiner Steifigkeit lediglich in Axialrichtung und in Horizontalrichtung voneinander unterscheidet. Dies wird erreicht durch eine engere Anordnung von Hohlknälen 21 in vertikaler Richtung.

Bei dem Ausführungsbeispiel nach Fig. 6 ist in dem dargestellten Querschnitt zu erkennen, daß die Hohlkanäle auch aus nur einseitig offenen und im Innern des Elastomerkörpers 3 blind endenden Radialkanälen 22 bzw. 23 ausgebildet sein können. In der linken Hälfte der Darstellung sind dabei sowohl Axialkanäle 21 als auch im horizontalen Bereich Radialkanäle 22 vorgesehen, wobei diese Radialkanäle 22 im allgemeinen auch eine bessere Einstellung und Anpassung der Axialsteifigkeit einer solchen Buchse ermöglichen. In der rechten Hälfte von Fig. 6 sind in entsprechenen Radialebenen lediglich Radialkanäle 23 angeordnet.

Wie man dazu aus dem Längsschnitt nach Fig. 7 entsprechend der Schnittlinie VII-VII aus Fig. 6 ersieht, sind die Radialkanäle 23 in mehreren Radialebenen nebeneinander angeordnet. Die Axialkanäle können dabei aber auch eine andere, von der Konfiguration in Fig. 1 abweichende Form aufweisen, indem etwa im linken oberen Teil der Figur der Kanal 21 nur eine einzige, mittige venturiartige Verengung 24 aufweist, während auf der rechten Seite Hohlkanäle 20 mit dichter aufeinanderfolgenden, venturiartigen Verengungen 25 vorgesehen sind.

Bei dieser Figur weist der Radialanschlag 4 nicht nur am Außenumfang, sondern auch auf seinen Stirnseiten eine weichere Auflage 26 auf und kann somit auch als Axialanschlag für die Buchse dienen.

Bei dem Ausführungsbeispiel nach Fig. 8 ist der Elastomerkörper 30 mit seinen Hohlkanälen 31 einstückig ausgebildet, wobei dann der Buchsenkern 32 auf beiden Stirnseiten des Elastomerkörpers 30 je einen entsprechenden Radialanschlag 33 und 34 aufweist.

Bei den Buchsenlagern entsprechend Fig. 1 und 2 bzw. 4 und 5 mit lediglich Axialkanälen ist es möglich, daß dabei der Elastomerkörper 3 unmittelbar an die Außenhülse 1 und den Buchsenkern 2 gehaftet, d.h. anvulkanisiert ist. Bei einer Gestaltung mit Radialkanälen entsprechen Fig. 5 ist es zweckmäßiger, wenn der Elastomerkörper lediglich an den Buchsenkern 2 gehaftet ist, während dann die Außenhülse 1 aufgepreßt un an den Enden umgebördelt wird.

Es ist aber auch möglich, den Elastomerkörper zunächst gesondert herzustellen und dann - zweckmäßigerweise unter Vorspannung - in den Zwischenraum zwischen Außenhülse und Buchsenkern einzuschießen.

Insgesamt ergibt sich also ein Radial-Buchsenlager, das ein sehr gutes akustisches Übertragungsverhalten aufweist und bei dem mit einfachen Mitteln unterschiedliche axiale und radiale Steifigkeiten - letzere auch bezüglich unterschiedlicher Radialrichtungen - eingestellt werden können.

## Patentansprüche

1. Radial-Buchsenlager, insbesondere für Kraftfahrzeuge, mit einer zylindrischen Außenhülse (1) und einem zentralen Buchsenkern (2), zwischen denen mindestens ein Elastomerkörper (3) vorgesehen ist, wobei der Ringspalt zwischen Außenhülse (1) und Buchsenkern (2) vollständig umlaufend mit dem Elastomerkörper (3) ausgefüllt ist, der den Ringspalt zumindest auf einem Teilbereich durchsetzende Hohlkanäle (10 bis 16; 21,22,23) mit einen Kanalabschnitt mit zunehmender Verengung (7,24,25) und einer sich daran anschließenden Erweiterung (8) auf den Ursprungsquerschnitt aufweist,
dadurch gekennzeichnet, daß
der Elastomerkörper (3) zwischen Außenhülse (1) und Buchsenkern (2) eingespannt ist, daß die Hohlkanäle (10 bis 16;21,22,23) einen kreisförmigen Querschnitt aufweisen und daß die Kanalabschnitte mit den Verengungen (7,24,25) und Erweiterungen (8) jeweils in Form einer Venturidüse so ausgebildet sind, daß der Übergang der jeweiligen Verengung (7,24,25) zu der sich daran anschließenden Erweiterung (8) stetig und ohne einen Kanalabschnitt mit konstantem Querschnitt erfolgt.

2. Radial-Buchsenlager nach Anspruch 1, dadurch gekennzeichnet, daß die Hohlkanäle (10 bis 16; 20, 21) parallel zur Buchsenachse verlaufen und den Elastomerkörper (3) auf seiner gesamten Länge durchsetzen.

3. Radial-Buchsenlager nach Anspruch 1, dadurch gekennzeichnet, daß die Hohlkanäle (22, 23) radial in mehreren Radialebenen im Elastomerkörper (3) verlaufen und im Abstand zum Buchsenkern (2) stumpf im Elastomerkörper (3) enden.

4. Radial-Buchsenlager nach Anspruch 1 bis 3, dadurch gekennzeichnet, daß der Elastomerkörper (3) sowohl achsparallel verlaufende Hohlkanäle (21) als auch zwischen den achsparallelen Hohlkanälen (21) endende Radialkanäle (22) aufweist.

5. Radial-Buchsenlager nach Anspruch 2, dadurch gekennzeichnet, daß die achsparallelen Hohlkanäle (20) mit gleichem gegenseitigen Abstand auf einer Zylinderfläche im Elastomerkörper (3) angeordnet sind.

6. Radial-Buchsenlager nach Anspruch 2, dadurch gekennzeichnet, daß die achsparallelen Hohlkanäle (21) unterschiedlichen radialen Abstand von der Buchsenachse aufweisen.

7. Radial-Buchsenlager nach Anspruch 2, dadurch gekennzeichnet, daß die achsparallelen Hohlkanäle (10 bis 16) mit unterschiedlichem meridianen Abstand voneinander angeordnet sind.

8. Radial-Buchsenlager nach Anspruch 2 oder 7, dadurch gekennzeichnet, daß die achsparallelen Hohlkanäle in Bereichen geringerer Radialsteifigkeit einen geringeren Abstand voneinander aufweisen als in Bereichen höherer Radialsteifigkeit.

9. Radial-Buchsenlager nach Anspruch 2, dadurch gekennzeichnet, daß die achsparallen Hohlkanäle in Bereichen geringerer Radialsteifigkeit einen größeren Durchmesser aufweisen.

10. Radial-Buchsenlager nach einem oder mehreren der Ansprüche 1 bis 9, dadurch gekennzeichnet, daß der Elastomerkörper (3) in axialer Richtung zweiteilig ausgebildet ist und zwischen den beiden Elastomerkörpern und dem Buchsenkern (2) ein radialer Bund (4) als Radialanschlag angeordnet ist.

11. Radial-Buchsenlager nach einem der Ansprüche 1 bis 9, dadurch gekennzeichnet, daß der Elastomerkörper (30) einteilig ausgebildet ist und beiderseits des Elastomerkörpers (30) je ein Bund (33, 34) als Radialanschlag vorgesehen ist.

12. Radial-Buchsenlager nach Anspruch 10 oder 11, dadurch gekennzeichnet, daß der Radialanschlag (4; 33, 34) eine geringere radiale Höhe als der Elastomerkörper (3, 30) aufweist und auf seinem Außenumfang mit einer elastischen Auflage (5; 26) versehen ist.

13. Radial-Buchsenlager nach Anspruch 12, dadurch gekennzeichnet, daß der Bund (4, 26) gleichzeitig als Axialanschlag ausgebildet ist.

14. Radial-Buchsenlager nach einem der Ansprüche 5 bis 7, dadurch gekennzeichnet, daß der Elastomerkörper (3) am Außen- und Innenumfang an Außenhülse (1) und Buchsenkern (2) anvulkanisiert ist.

15. Radial-Buchsenlager nach einem oder mehreren der Ansprüche 2 bis 7, dadurch gekennzeichnet, daß der Elastomerkörper (3) am Innenumfang an den Buchsenkern (2) anvulkanisiert und die Außenhülse (1) axial aufgepreßt ist.

16. Radial-Buchsenlager nach einem oder mehreren der Ansprüche 2 bis 7, dadurch gekennzeichnet, daß der Elastomerkörper (3) am Außenumfang an die Hülse (1) anvulkanisiert und der Buchsenkern (2) in den Elastomerkörper (3) eingepreßt ist.

17. Radial-Buchsenlager nach einem oder mehreren der Ansprüche 2 bis 7, dadurch gekennzeichnet, daß der Elastomerkörper (3) gesondert ausvulkanisiert und anschließend in den Ringspalt zwischen Außenhülse (1) und Buchsenkern (2) eingeschossen ist.

## Claims

1. Radial bush bearing, in particular for motor vehicles, having a cylindrical outer sleeve (1) and a central bush core (2), between which at least one elastomer body (3) is provided, wherein the annular gap between the outer sleeve (1) and the bush core (2) is completely continuously filled with the elastomer body (3), which has hollow channels (10 to 16; 21, 22, 23) penetrating the annular gap at least in part and having a progressively narrowing section (7, 24, 25) and an adjoining widened region (8) compared to the original cross-section, characterised in that the elastomer body (3) is clamped between the outer sleeve (1) and the bush core (2), in that the hollow channels (10 to 16; 21, 22, 23) have a circular cross-section, and in that the channel sections with the the narrowed sections (7, 24, 25) and widened sections (8) are each formed as a Venturi nozzle, so that the transition from each narrowed section (7, 24, 25) to the adjacent widened section (8) is effected gradually and without a channel section having a constant cross-section.

2. Radial bush bearing according to claim 1, characterised in that the hollow channels (10 to 16; 20, 21,) extend parallel to the bush axis and penetrate the entire length of the elastomer body (3).

3. Radial bush bearing according to claim 1, characterised in that the hollow channels (22, 23) extend radially in the elastomer body (3) in a plurality of radial planes and end with clearance from the bush core (2) flush in the elastomer body (3).

4. Radial bush bearing according to claim 1 to 3, characterised in that the elastomer body (3) has both axially parallel hollow channels (21) and radial channels (22) ending between the axially parallel hollow channels (21).

5. Radial bush bearing according to claim 2, characterised in that the axially parallel hollow channels (20) are arranged with equal spacing on a cylinder face in the elastomer body (3).

6. Radial bush bearing according to claim 2, characterised in that the axially parallel hollow channels (21) have different radial spacings from the bush axis.

7. Radial bush bearing according to claim 2, characterised in that the axially parallel hollow channels (10 to 16) are arranged with a different meridian spacing from one another.

8. Radial bush bearing according to claim 2 or 7, characterised in that the axially parallel hollow channels have in areas of lower radial rigidity a smaller spacing than in areas of higher radial rigidity.

9. Radial bush bearing according to claim 2 characterised in that the axially parallel hollow channels have a larger diameter in areas of lower radial rigidity.

10. Radial bush bearing according to one or more of claims 1 to 9, characterised in that the elastomer body (3) is formed in two parts in the axial direction and a radial collar (4) acting as a radial stop is disposed between the two elastomer bodies and the bush core (2).

11. Radial bush bearing according to one of claims 1 to 9, characterised in that the elastomer body (30) is formed in one part, and a respective collar (33, 34) acting as a radial stop is provided on each side of the elastomer body (30).

12. Radial bush bearing according to claim 10 or 11, characterised in that the radial stop (4; 33, 34) has a smaller radial height than the elastomer body (3, 30) and is provided on its outer circumference with a resilient support (5; 26).

13. Radial bush bearing according to claim 12, characterised in that the collar (4, 26) is simultaneously formed as an axial stop.

14. Radial bush bearing according to one of claims 5 to 7, characterised in that the elastomer body (3) is vulcanised on to the outer sleeve (1) and the bush core (2) by the outer and inner circumferences.

15. Radial bush bearing according to one or more of claims 2 to 7, characterised in that the elastomer body (3) is vulcanised on to the bush core (2) by the inner circumference, and the outer sleeve (1) is axially pressed on.

16. Radial bush bearing according to one or more of claims 2 to 7, characterised in that the elastomer body (3) is vulcanised on to the sleeve (1) by the outer circumference and the bush core (2) is pressed into the elastomer body (3).

17. Radial bush bearing according to one or more of claims 2 to 7, characterised in that the elastomer body (3) is vulcanised on separately and is then enclosed in the annular gap between the outer sleeve (1) and the bush core (2).

## Revendications

1. Support radial en forme de manchon, notamment pour véhicule automobile, comprenant une douille (1) extérieure cylindrique et un noyau (2) de manchon central entre lesquels est prévue au moins une pièce (3) en élastomère, l'intervalle annulaire entre la douille (1) extérieure et le noyau (2) de manchon étant empli entièrement tout autour de la pièce (3) en élastomère, qui comporte des canaux (10 à 16; 21, 22, 23) traversant l'intervalle annulaire au moins sur une partie et ayant un tronçon se rétrécissant (7, 24, 25) de plus en plus et un élargissement (8) y faisant suite par rapport à la section transversale d'origine,
caractérisé en ce que
la pièce (3) en élastomère est bloquée entre la douille (1) extérieure et le noyau (2) du manchon, en ce que les canaux (1 à 16; 21, 22, 23) ont une section transversale circulaire, et en ce que les tronçons de canaux ayant les rétrécissements (7, 24, 25) et les élargissements (8) ont la forme d'une buse à venturi, en ce que la transition d'un rétrécissement (7, 24,25) à l'élargissement (8) qui y fait suite s'effectue d'une manière continue et sans un tronçon de canal de section transversale constante.

2. Support radial en forme de manchon suivant la revendication 1, caractérisé en ce que les canaux (10 à 16; 20, 21) s'étendent parallèlement à l'axe du manchon et traversent le pièce (3) en élastomère sur toute sa longueur.

3. Support radial en forme de manchon suivant la revendication 1, caractérisé en ce que les canaux (22, 23) s'étendent radialement dans plusieurs plans radiaux dans la pièce (3) en élastomère et sont borgnes dans la pièce (3) en élastomère en se terminant à distance du noyau (2) du manchon.

4. Support radial en forme de manchon suivant la revendication 1 à 3, caractérisé en ce que la pièce (3) en élastomère comporte à la fois des canaux (21) s'étendant parallèlement à l'axe et des canaux (22) radiaux se terminant entre les canaux (21) parallèles à l'axe.

5. Support radial en forme de manchon suivant la revendication 2, caractérisé en ce que les canaux (20) parallèles à l'axe sont disposés à une même distance mutuelle sur une surface cylindrique dans la pièce (3) en élastomère.

6. Support radial en forme de manchon suivant la revendication 2, caractérisé en ce que les canaux (21) parallèles à l'axe sont à des distances radiales différentes de l'axe du manchon.

7. Support radial en forme de manchon suivant la revendication 2, caractérisé en ce que les canaux (10 à 16) parallèles à l'axe sont à des distances méridiennes différentes l'un de l'autre.

8. Support radial en forme de manchon suivant la revendication 2 ou 7, caractérisé en ce que les canaux parallèles à l'axe sont, dans des zones de rigidité radiale plus petites, moins éloignés les uns des autres que dans des zones de rigidité radiale plus grandes.

9. Support radial en forme de manchon suivant la revendication 2, caractérisé en ce que les canaux parallèles à l'axe ont un diamètre plus grand dans des zones de rigidité radiale plus petites.

10. Support radial en forme de manchon suivant l'une ou plusieurs des revendications 1 à 9, caractérisé en ce que la pièce (3) en élastomère est constituée en deux parties dans la direction axiale, et qu'un collier (4) radial, servant de butée radiale, est interposé entre les deux pièces en élastomère et le noyau (2) du manchon.

11. Support radial en forme de manchon suivant l'une des revendications 1 à 9, caractérisé en ce que la pièce (30) en élastomère est d'un seul tenant, et il est prévu des deux côtés de la pièce (30) en élastomère, respectivement des colliers (33, 34) servant de butée radiale.

12. Support radial en forme de manchon suivant la revendication 10 ou 11, caractérisé en ce que la butée (4; 33, 34) radiale a une hauteur radiale plus petite que la pièce (3, 30) en élastomère et est munie sur son pourtour extérieur d'un support (5, 26) élastique.

13. Support radial en forme de manchon suivant la revendication 12, caractérisé en ce que le collier (4, 26) affecte en même temps la forme d'une butée axiale.

14. Support radial en forme de manchon suivant l'une des revendications 5 à 7, caractérisé en ce que la pièce (3) en élastomère est vulcanisée sur le pourtour extérieur et intérieur de la douille (1) extérieure et du noyau (2) du manchon.

15. Support radial en forme de manchon suivant l'une ou plusieurs des revendications 2 à 7, caractérisé en ce que la pièce (3) en élastomère est vulcanisée sur le pourtour intérieur du noyau (2) du manchon et la douille (1) extérieure est appliquée avec une pression axiale.

16. Support radial en forme de manchon suivant l'une ou plusieurs des revendications 2 à 7, caractérisé en ce que la pièce (3) en élastomère est vulcanisée sur le pourtour extérieur de la douille (1) et le noyau (2) du manchon est enfoncé dans la pièce (3) en élastomère.

17. Support radial en forme de manchon suivant l'une ou plusieurs des revendications 2 à 7, caractérisé en ce que la pièce (3) en élastomère est vulcanisée indépendamment et est enfilée ensuite dans l'espace annulaire compris entre la douille (1) extérieure et le noyau (2) du manchon.
